# EUROPEAN PATENT SPECIFICATION

(11) **EP 3 549 003 B1**
(45) Date of publication and mention of the grant of the patent: **13.05.2020**
(21) Application number: 17830038.0
(22) Date of filing: 01.12.2017
(51) Int. Cl.: G06F 3/048

(54) **COLLABORATIVE MANIPULATION OF OBJECTS IN VIRTUAL REALITY**
KOLLABORATIVE MANIPULATION VON OBJEKTEN IN VIRTUELLEN REALITÄT
MANIPULATION COLLABORATIVE D'OBJETS EN RÉALITÉ VIRTUELLE

(30) Priority: 02.12.2016 US 201615367953
(43) Date of publication of application: 09.10.2019
(73) Proprietor: Google LLC, Mountain View, CA 94043 (US)
(72) Inventor: GLEASON, Tim, Mountain View, California 94043 (US); MACGILLIVRAY, Ian, Mountain View, California 94043 (US)
(74) Representative: Maikowski & Ninnemann Patentanwälte Partnerschaft mbB
(86) International application number: PCT/US2017/064148
(87) International publication number: WO 2018/102649

(56) References cited:
- US-A1- 2006 173 850
- US-A1- 2013 148 891
- US-A1- 2013 262 373
- US-A1- 2016 328 127

## Description

### CROSS-REFERENCE TO RELATED APPLICATION

This application is a continuation of, and claims priority to, U.S. Patent Application No. 15/367,953, filed on December 2, 2016, entitled "COLLABORATIVE MANIPULATION OF OBJECTS IN VIRTUAL REALITY".

### TECHNICAL FIELD

This description relates to objects in virtual reality environments.

### BACKGROUND

Multiple users can interact with software objects in collaborative environments. Network lag and other factors may cause conflicts to occur, e.g., two or more users simultaneously attempting to modify the same object in different ways. This can be seen in document US 2016/328127 A1.

### SUMMARY

In one general aspect, a method can include receiving, by processing circuitry of a virtual reality (VR) server configured to produce a VR environment, a first request from a first user to perform a first manipulation of an object in the VR environment from a current state to a first state and a second request from a second user to perform a second manipulation of the object in the VR environment from the current state to a second state. The method can also include identifying a conflict condition indicating a conflict between the first request and the second request. The method can further include providing the first user with an image of the object after performing the first manipulation and providing the second user with an image of the object after performing the second manipulation. The method can further include resolving the conflict to produce a resolved condition indicating a grant of the first request and a denial of the second request. The method can further include, in response to producing the resolved condition, providing the second user with an animation of a manipulation of the object to the first state.

The details of one or more implementations are set forth in the accompanying drawings and the description below. Other features will be apparent from the description and drawings, and from the claims.

### BRIEF DESCRIPTION OF THE DRAWINGS

FIG. 1 is a diagram that illustrates an example electronic environment in which improved techniques described herein may be implemented.
FIG. 2 is a flow chart that illustrates an example method of implementing the improved techniques as shown in FIG. 1.
FIGS. 3A and 3B are diagrams of an example set of users interacting with an object in a VR environment prior to conflict resolution according to the improved techniques shown in FIG. 1.
FIG. 4 is a flow chart that illustrates an example process of resolving conflicts according to the improved techniques shown in FIG. 1.
FIGS. 5A and 5B are diagrams of an example set of users interacting with an object in a VR environment after conflict resolution according to the improved techniques shown in FIG. 1.
FIG. 6 illustrates an example of a computer device and a mobile computer device that can be used with circuits described here.
FIG. 7 is a diagram depicting an example VR head-mounted display (HMD).
FIGS. 8A, 8B, and 8C are diagrams depicting the example VR HMD and controller.

### DETAILED DESCRIPTION

Multiple users can interact with software objects. Network lag and other factors may cause conflicts to occur, e.g., two or more users simultaneously attempting to modify the same object in different ways, e.g., a word in a shared document editing environment. Conventional approaches to conflict resolution in a shared environment involves moving the object or hiding the object until a change is approved.

The conventional approaches to conflict resolution apply to two-dimensional environments in which a user is not immersed, e.g., collaborative word-processing software. In three-dimensional immersive environments such as VR, however, the conventional approaches to conflict resolution may cause the users discomfort and/or disrupt the immersion in their respective environments.

In accordance with the implementations described herein, improved techniques of conflict resolution in VR environments involve a VR server generating a conflict state when a virtual object in a VR environment is simultaneously manipulated by more than one user in the VR environment. When the virtual object is in a conflict state, the VR server shows each user their own manipulation. When conflict is resolved, each user sees the virtual object being animated to the resolved state. In this way, each user sees a natural and cohesive view of the VR environment and remains immersed in that environment. Virtual objects do not suddenly disappear upon a manipulation and reappear elsewhere in a different form, but rather change in a continuous manner.

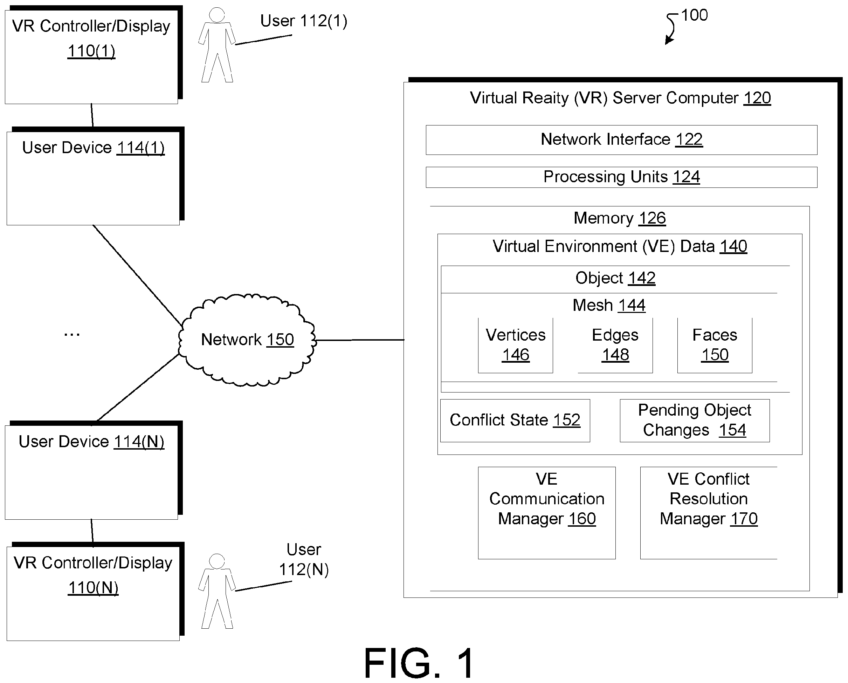

FIG. 1 is a diagram that illustrates an example electronic environment 100 in which the above-described improved techniques may be implemented. As shown, in FIG. 1, the electronic environment 100 includes a plurality of users 112(1),..., 112(N), each immersed in a VR environment via a respective VR Controller 110(1),..., 110(N) controlled by a user device 114(1),..., 114(N). The electronic environment 100 also includes a VR server computer 120 and a network 150.

The VR controller 110 may take the form of a head-mounted display (HMD) which is worn by the user 112 to provide an immersive virtual environment. In the example electronic environment 100, the user 112(1) that wears the VR controller 110(1) holds a user device, i.e., user device 114(1). The user device 114(1) may be, for example, a smartphone, a controller, a joystick, or another portable handheld electronic device(s) that may be paired with, and communicate with, the VR controller 110(1) for interaction in the immersive virtual environment. The user device 114(1) may be operably coupled with, or paired with the VR controller 110(1) via, for example, a wired connection, or a wireless connection such as, for example, a WiFi or Bluetooth connection. This pairing, or operable coupling, of the user device 114(1) and the VR controller 110(1) may provide for communication between the user device 114(1) and the VR controller 110(1) and the exchange of data between the user device 114(1) and the VR controller 110(1). This may allow the user device 114(1) to function as a controller in communication with the VR controller 110(1) for interacting in the immersive virtual environment. That is, a manipulation of the user device 114(1), such as, for example, a beam or ray emitted by the user device 114(1) and directed to a virtual object or feature for selection, and/or an input received on a touch surface of the user device 114(1), and/or a movement of the user device 114(1), may be translated into a corresponding selection, or movement, or other type of interaction, in the immersive virtual environment provided by the VR controller 110(1).

The VR server computer 120 is configured to generate data for the immersive virtual environment and transmit that data to the user device, e.g., 114(1) over the network 150. As illustrated in FIG. 1, the VR server computer 120 is implemented as a computer system that is in communication with the user device 114(1) over the network 150. Nevertheless, in other implementations, the VR server computer 120 is included with one of the user devices, e.g., user device 114(1).

In some embodiments, one or more of the components of the VR server computer 120 can be, or can include processors (e.g., processing units 124) configured to process instructions stored in the memory 126. Examples of such instructions as depicted in FIG. 1 include a Virtual Environment (VE) Communication manager 160 and a VE conflict resolution manager 170. Further, as illustrated in FIG. 1, the memory 126 is configured to store various data, which is described with respect to the respective managers that use such data.

The VE communication manager 160 is configured to receive and process requests for changes to the virtual environment, represented in the VR server computer 120 as VE data 140. For example, when a user 112(1) immersed in the virtual environment moves a virtual object 142 in the virtual environment, the VR controller/display 110(1) displays the change to the user 112(1) locally. Nevertheless, the user device 114(1), on which the VE data 140 are processed for display, sends the change in the virtual environment caused by moving the virtual object to the VR server computer 120 over the network 150 so that the VE data stored thereon may be updated. In this way, changes made to the virtual environment by one user are experienced by all users immersed in the virtual environment.

In some implementations and as illustrated in FIG. 1, a virtual object 142 in a virtual environment is represented as a mesh 144. The mesh 144 of a three-dimensional virtual object 142 may contain any number of vertices 146, edges 148, and faces 150. In this way, any changes to the object 142 may be represented as specific changes to one or more vertices 146, edges 148, and/or faces 150. Further, the VR server computer 120 may store not only direct changes to the mesh 144 but also second-order effects, e.g., the movement of a vertex 146 as part of a deformation of the object 142 may cause another vertex 146 to move.

When a user, e.g., user 112(1) makes a change to the virtual object 142 in the virtual environment, the VE communication manager 142 is configured to store the change to memory 126 as a pending object change 154. Each pending object change 154 stored in memory 126 represents a request to change the object 142. In many cases, the pending object changes 154 are non-conflicting (i.e., the changes are orthogonal in that a first change does not undo any part of a second change) and the net change to the object 142 is an aggregation of the pending object changes 154. In some implementations, the VR server computer 120 is configured to make changes to the mesh 144 according to the pending object changes 154. The VE communication manager 160 is then configured to pass the changes to each user device 114(1),..., 114(N) so that each user 112(1),..., 112(N) sees the same aggregated change in the object 142 in the virtual environment.

Nevertheless, in some cases, there may be pending object changes 154 that are conflicting. For example, consider a request to move an edge 148 of the object 142 10 cm to the right from user 112(1) stored in the pending object changes 154. Suppose there is also a request to move that same edge 148 10 cm to the left at substantially the same time. Such pending object changes 154 would conflict. Nevertheless, even changes to non-coinciding vertices, edges, and faces can result in conflicts. For example, the movement of a first face and a neighboring second face can result in conflicting motion when the motion of the second face undoes part of the motion of the first face.

Along these lines, VE conflict resolution manager 170 is configured to generate a conflict state 152 that indicates the existence of conflicting object changes in the pending object changes 154. In some implementations, the VE conflict resolution manager 170 generates a conflict state 152 by locating all pending object changes 154 having the same timestamps and then applying a set of rules to the changes to the mesh 144 specified in these changes. For example, one such rule might take the form of generating a conflict state 152 whenever the same vertex 146, edge 148, and/or face 150 is changed in more than one way simultaneously. Accordingly, the above example of moving an edge simultaneously 10 cm to the right and to the left would generate a conflict state 152. Generally, such a conflict state 152 is generated by the VE conflict resolution manager 170 in response to an identification of a conflict condition such as those described above.

In response to the existence of a conflict state 152, the VE conflict resolution manager 170 is further configured to resolve the conflict. In this context, resolving the conflict typically means selecting one of the pending object changes 154 that are identified as causing the conflict state 152. In some implementations, the VE conflict resolution manager 170 is configured to apply a set of rules to select the pending object change 154 to apply within the virtual environment. The VE communication manager 160 is then configured to communicate the selected object change to the user devices 114(1),..., 114(N) over the network 150.

The VR server computer 120 includes a network interface 122, one or more processing units 124, and memory 126. The network interface 122 includes, for example, Ethernet adaptors, Token Ring adaptors, and the like, for converting electronic and/or optical signals received from the network 150 to electronic form for use by the VR server computer 120. The set of processing units 124 include one or more processing chips and/or assemblies. The memory 126 includes both volatile memory (e.g., RAM) and non-volatile memory, such as one or more ROMs, disk drives, solid state drives, and the like. The set of processing units 124 and the memory 126 together form control circuitry, which is configured and arranged to carry out various methods and functions as described herein.

The components (e.g., modules, processing units 124) of the user device 120 can be configured to operate based on one or more platforms (e.g., one or more similar or different platforms) that can include one or more types of hardware, software, firmware, operating systems, runtime libraries, and/or so forth. In some implementations, the components of the VR server computer 120 120 can be configured to operate within a cluster of devices (e.g., a server farm). In such an implementation, the functionality and processing of the components of the VR server computer 120 can be distributed to several devices of the cluster of devices.

The components of the VR server computer 120 can be, or can include, any type of hardware and/or software configured to process attributes. In some implementations, one or more portions of the components shown in the components of the VR server computer 120 in FIG. 1 can be, or can include, a hardware-based module (e.g., a digital signal processor (DSP), a field programmable gate array (FPGA), a memory), a firmware module, and/or a software-based module (e.g., a module of computer code, a set of computer-readable instructions that can be executed at a computer). For example, in some implementations, one or more portions of the components of the VR server computer 120 can be, or can include, a software module configured for execution by at least one processor (not shown). In some implementations, the functionality of the components can be included in different modules and/or different components than those shown in FIG. 1.

Although not shown, in some implementations, the components of the user device 120 (or portions thereof) can be configured to operate within, for example, a data center (e.g., a cloud computing environment), a computer system, one or more server/host devices, and/or so forth. In some implementations, the components of the VR server computer 120 (or portions thereof) can be configured to operate within a network. Thus, the components of the VR server computer 120 (or portions thereof) can be configured to function within various types of network environments that can include one or more devices and/or one or more server devices. For example, the network can be, or can include, a local area network (LAN), a wide area network (WAN), and/or so forth. The network can be, or can include, a wireless network and/or wireless network implemented using, for example, gateway devices, bridges, switches, and/or so forth. The network can include one or more segments and/or can have portions based on various protocols such as Internet Protocol (IP) and/or a proprietary protocol. The network can include at least a portion of the Internet.

In some embodiments, one or more of the components of the VR server computer 120 can be, or can include, processors configured to process instructions stored in a memory. For example, a VE communications manager 160 (and/or a portion thereof) and a VE conflict resolution manager 170 can be a combination of a processor and a memory configured to execute instructions related to a process to implement one or more functions.

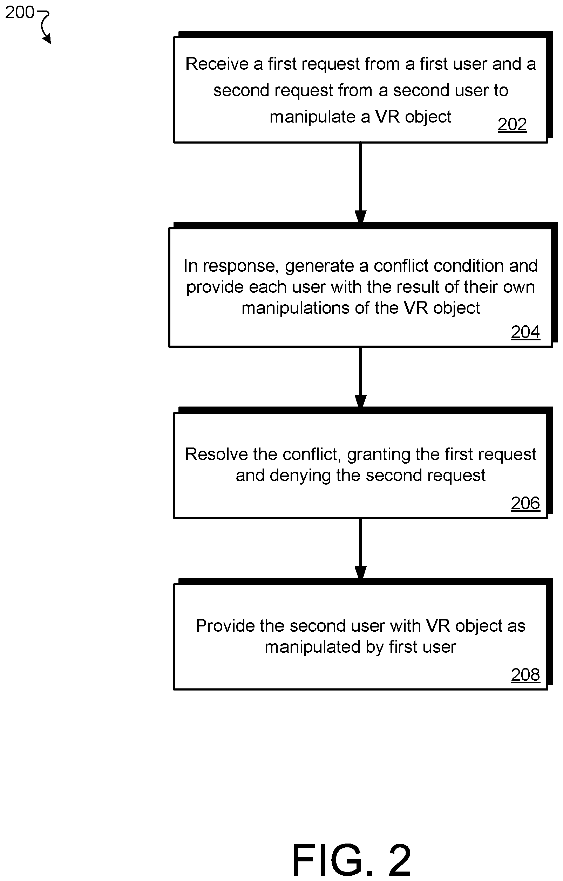

In some implementations, the memory 126 can be any type of memory such as a random-access memory, a disk drive memory, flash memory, and/or so forth. In some implementations, the memory 126 can be implemented as more than one memory component (e.g., more than one RAM component or disk drive memory) associated with the components of the VR server computer 120. In some implementations, the memory 126 can be a database memory. In some implementations, the memory 126 can be, or can include, anon-local memory. For example, the memory 126 can be, or can include, a memory shared by multiple devices (not shown). In some implementations, the memory 126 can be associated with a server device (not shown) within a network and configured to serve the components of the VR server computer 120. As illustrated in FIG. 2, the memory 126 is configured to store various data, including VE data 140, a conflict state 152, and pending object changes 154.

FIG. 2 is a flow chart depicting an example method 200 of resolving conflicts within a virtual environment. The method 200 may be performed by software constructs described in connection with FIG. 1, which reside in memory 126 of the VR server computer 120 and are run by the set of processing units 124.

At 202, the VR server computer 120 receives a first request from a first user, e.g., user 112(1), and a second request from a second user, e.g., user 112(2). For example, the first request may result from the first user moving an edge of a VR object 10 cm to the right of some arbitrary axis in the virtual environment. Further, the second request may result from the second user moving the same edge of the virtual object 10 cm in the opposite direction. The requests may take the form of operational transforms generated by an interpreter on the respective user devices 114(1) and 114(2) in response to the movements of the edges in the virtual environment.

At 204, in response to receiving the requests, the VR server computer 120 generates a conflict state and provides each user with the result of their own manipulations (i.e., first and second manipulations) of the VR object. This assumes that the VR server computer 120 has detected a conflict between the first request and the second request. For example, in providing each user 112(1) and 112(2) with the initial respective manipulations of the VR object, the VR server computer 120 provides each of the user devices 114(1) and 114(2) with software and/or hardware that are configured to display local changes to VR objects within the virtual environment being displayed. Accordingly, for a short time, the controller/display 110(1) will show a different position to user 112(1) of the VR object than that shown to user 112(2) by controller/display 110(2). In some implementations, however, the VR server computer 120 may send out the different object positions to each of the user devices 114(1) and 114(2) until the conflict is resolved.

However, to detect the conflict condition in the first place, the VR server computer 120 may examine the requests in real time or as the requests are stored in memory as, e.g., pending object changes 154. For example, in the latter case, the VR server 120 may examine those requests that have substantially the same timestamp for changes to the same vertices, edges, and/or faces of an object mesh. If there are such changes, then the VR server computer 120 may generate the conflict state 152.

At 206, the VR server computer 120 resolves the conflict by granting the first request and denying the second request. In some implementations, the VR server computer 120 resolves such conflicts using a set of rules. For example, one set of rules may specify that motion to the right is to be favored over motion to the left. In this case, the movement of the edge to the right in the first request would be favored over the movement of that edge to the left, and the first request would be favored. In some implementations, the VR server computer 120 maintains all requests in memory 126 whether they survive conflict resolution or not.

At 208, the VR server computer 120 provides the second user 112(2) with the VR object as manipulated by the first user 112(1). Note that, because the VR server computer 120 already provided the first user 112(1) with his/her manipulation, there is no need to resend that manipulation. In any case, the effect of sending the manipulation to the second user is to provide the user with a natural and cohesive view of the virtual environment. For example, in conventional techniques, a controlling server that maintains the virtual environment might have deleted the object or paused action in the virtual environment until the conflict was resolved, as this is the sort of technique used in two-dimensional, non-immersive environments such as collaborative word processors. Such conventional techniques would have a potentially bad effect on user immersed in a virtual environment, as there is a lack of continuity on which the user's brain depends. In contrast, the improved techniques described herein allow for such continuity while at the same time providing robust resolution to conflicts.

In some implementations, the VR server computer 120 provides the first user with an image of the object after performing the second manipulation and provides the second user with an image of the object after performing the first manipulation. In this case, each of the first user and second user is provided with respective images of the manipulations of the object to the first state and the second state. The VR server computer 120 may then provide each of the first user 112(1) and the second user 112(2) with respective deletions of the object in the second state, as these images are superfluous and are no longer needed.

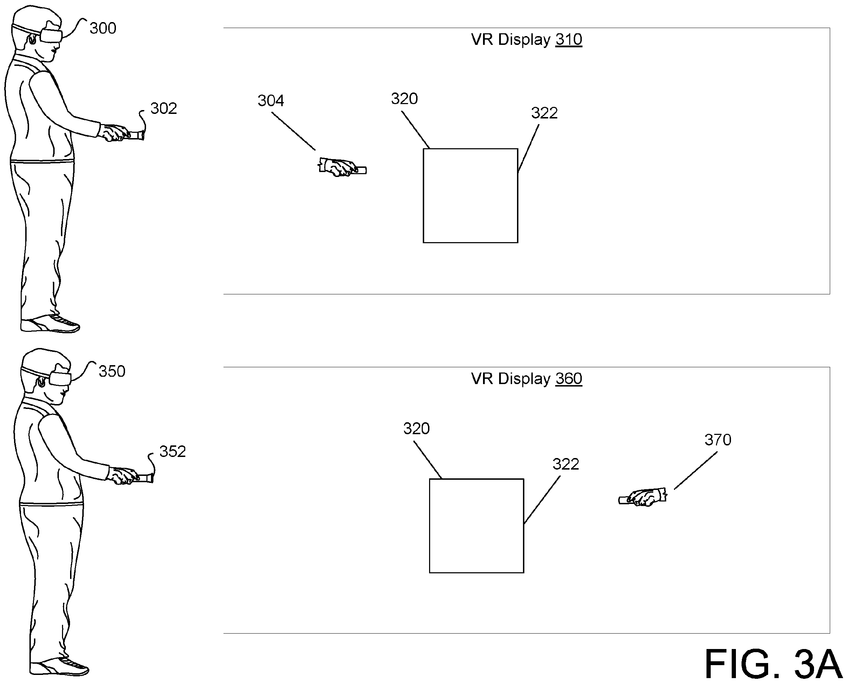

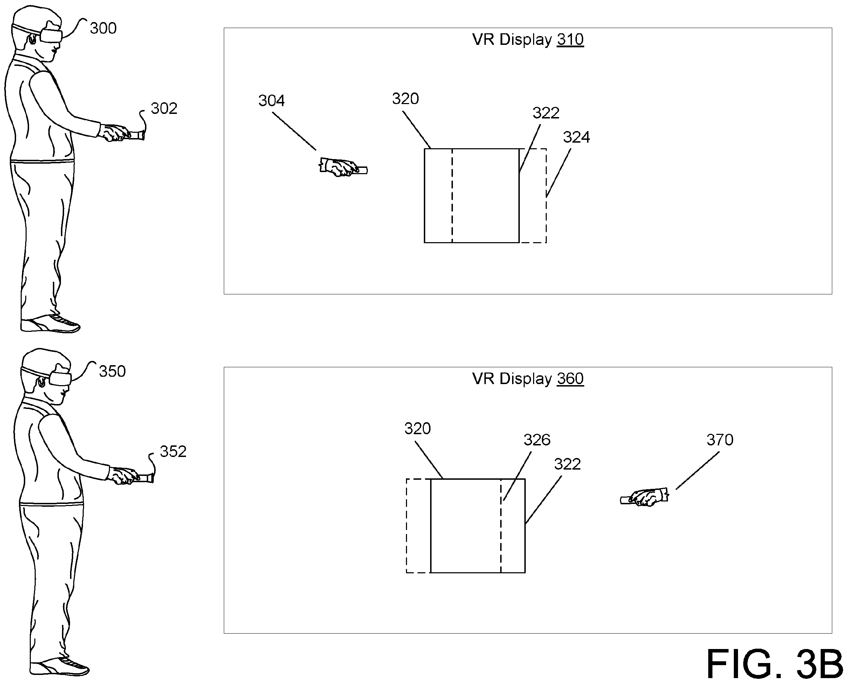

FIGS. 3A and 3B are diagrams illustrating an example generation of a conflict in a virtual environment. As shown in FIG. 3A, there are two users, 300 and 350, with respective controllers 302 and 352. The user 300 looks via his head-mounted display (HMD) 310 at his avatar 304 and an object 320 in the virtual environment. The user 350 looks via his HMD 360 at his avatar 370 and the object 320 in the virtual environment.

As shown in FIG. 3B, the user 300, via his avatar 304, moves the edge 322 of the object 320 to the right by some distance, say, 10 units measured in some length dimension within the virtual environment to the position 324. At the same time, the user 350, via his avatar 370, moves the edge 322 of the object 320 to the left by 10 units to the position 326. These manipulations by the users 300 and 350 cause their respective user devices (not shown) to generate requests for changing the object.

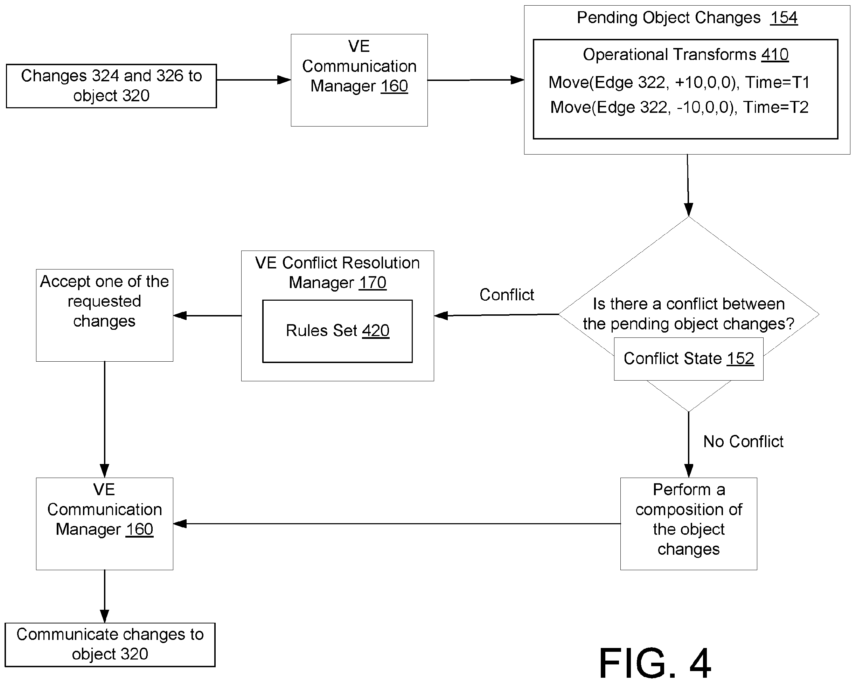

FIG. 4 is a flow chart illustrating an example processing of requests to change objects in a virtual environment, such as the above-described requests generated from the manipulations illustrated in FIG. 3. To begin, the VR server computer 120 receives the requested changes 324 and 326 to the object 320 via the VE communication manager 160. The VR server computer 120 then stores these requests as pending object changes 154 in memory 126.

In some implementations, the pending object changes 154 are expressed in terms of operational transformations. Operational transformation (OT) is a technology for supporting a range of collaboration functionalities in advanced collaborative software systems. OT was originally invented for consistency maintenance and concurrency control in collaborative editing of plain text documents. Nevertheless, it has been found as part of the improved techniques described herein that OT may be used for expressing manipulations of objects by different users sharing the same virtual environment containing those objects.

In FIG. 4, the manipulations are shown as example OTs 410 stored in memory as pending object changes 154. In this example, the first OT expresses an operation "Move" as a function of some element on which the function operates (the edge 322 as shown in FIG. 3) as well as the magnitude and direction of the operation (here, expressing 10 units to the right). The first OT also expresses the fact that the first request was received at time T1. The second OT expresses a move of the edge 322 10 units to the left, whose request was received at time T2.

Using the consistent language of the OTs that express the pending object changes 154, the VR server computer 120 determines whether there is a conflict between any of the pending object changes 154. In this case, both of the OTs 410 perform the same operation on the same element, but in different directions and different magnitudes. Generally speaking, if the difference between the times T2 and T1 is less than some threshold, e.g., 0.1 seconds, although such a threshold can be greater than or less than this amount, then the VR server computer 120 generates a conflict state 152. In one example, a conflict condition arises when a plurality of different users attempt to perform a change to the same object, each change at a respective time, the respective times being within some threshold interval, or any of the situations described above with regard to FIG. 1.

If there is no conflict state 152, then the VR server computer 120 performs an aggregation operation in the pending object changes 154 at any given time. For example, when two non-conflicting changes are requested at substantially the same time, the VR server computer 120 performs a composition of the two changes. In most cases, the order of the composition should not be important. However, in cases where order matter, e.g., regarding rotations in three dimensions about different axes, then the VR server computer 120 can generate the conflict state 152 and invoke the VE conflict resolution manager 170.

If there is a conflict state 152, then the VR server computer 120 invokes the VE conflict resolution manager 170, which is configured to resolve the conflict by selecting one of the pending object changes 154 that is in the conflict state 152. As described herein, in some implementations, the VE conflict resolution manager 170 references a rules set 420 to make the selection.

The rules set 420 is configured to provide a set of rules for selecting which pending object change 154 in a conflict state is to be selected as the change in the virtual environment. The rules set 420 may be expressed in the same OT language 410 used to express the pending object changes 154. For example, one such rule might be expressed as "Move(edge, +) > Move(edge,-)," meaning that moves to the right are favored over moves to the left. Such a rule would favor the first request over the second request.

Accordingly, in the conflict state, the VR server computer 120 selects one of the pending object changes 154 that is in the conflict state 152. In this way, the VR server computer 120 ensures a consistent virtual environment for all users.

In either case, whether or not there was a conflict, the VE communication manager communicates any net change to an object to each of the user devices 114(1),..., 114(N). In the case where there is a conflict and only one change is made, the users whose request did not get granted will have the changes communicated to them via, e.g., textual message, visual prompt (for example, blinking), and audio message. In the above example, only the user 112(2) needs to have the change to the object 320 communicated as the user 112(1) already has the change displayed.

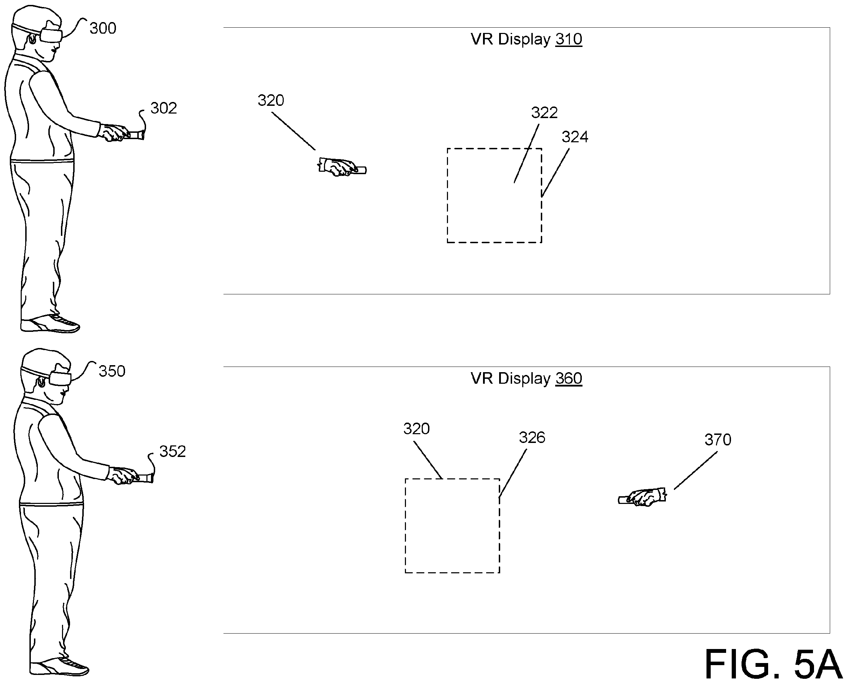

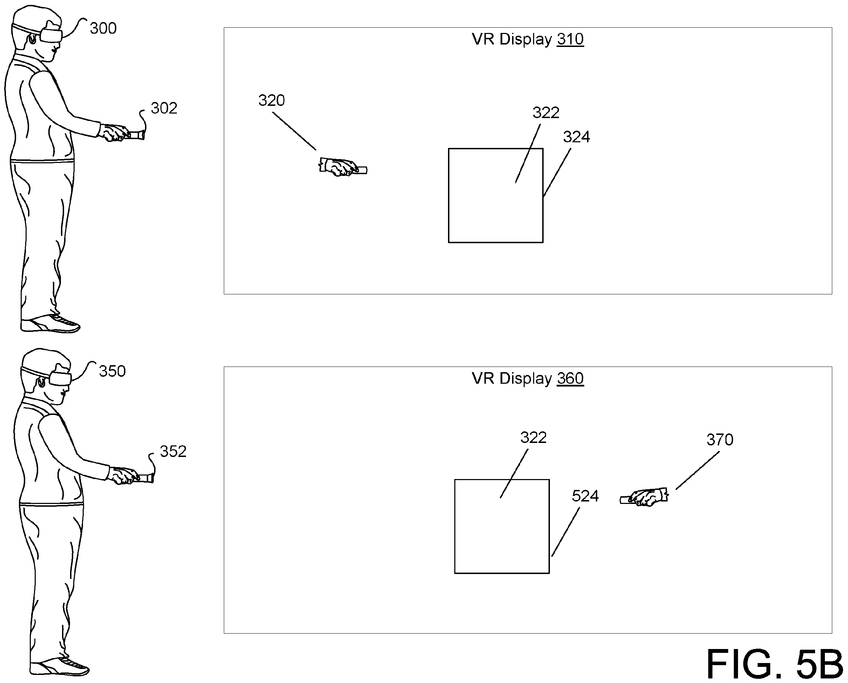

FIGS. 5 A and 5B are diagrams similar to FIGS. 3A and 3B, except with the VR display 360 showing the effect of the acceptance of the first change 324 rather than the change 326. In FIG. 5A, each user 300 and 350 sees their respective change in their displays 310 and 360. In FIG. 5B, the change 326 has disappeared and a new change 524, identical to the change 324, is shown. The user 350 should sense that the object, which was at the position marked at 326, has moved to the position marked at 524. This motion is in most cases fluid, e.g., including intermediate states, and continuous so that the change is not unpleasant to the user 350 In one example, the change of position 326 to 526 of object 320 is rendered in one or more intermediate states and the renderings of the intermediate states are shown to user 350 but not to user 300. In that manner user 350 sees the virtual object 320 being animated to the resolved state.

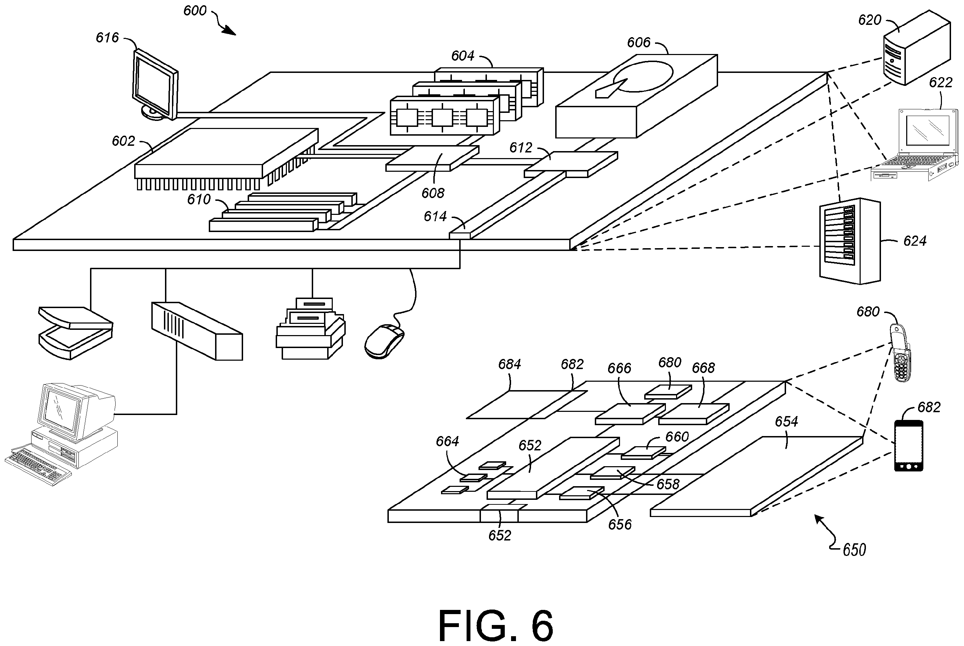

FIG. 6 illustrates an example of a generic computer device 600 and a generic mobile computer device 650, which may be used with the techniques described here.

As shown in FIG. 6, computing device 600 is intended to represent various forms of digital computers, such as laptops, desktops, workstations, personal digital assistants, servers, blade servers, mainframes, and other appropriate computers. Computing device 650 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 600 includes a processor 602, memory 604, a storage device 606, a high-speed interface 608 connecting to memory 604 and high-speed expansion ports 610, and a low speed interface 612 connecting to low speed bus 614 and storage device 606. Each of the components 602, 604, 606, 608, 610, and 612, are interconnected using various busses, and may be mounted on a common motherboard or in other manners as appropriate. The processor 602 can process instructions for execution within the computing device 600, including instructions stored in the memory 604 or on the storage device 606 to display graphical information for a GUI on an external input/output device, such as display 616 coupled to high speed interface 608. In other implementations, multiple processors and/or multiple buses may be used, as appropriate, along with multiple memories and types of memory. Also, multiple computing devices 600 may be connected, with each device providing portions of the necessary operations (e.g., as a server bank, a group of blade servers, or a multi-processor system).

The memory 604 stores information within the computing device 600. In one implementation, the memory 604 is a volatile memory unit or units. In another implementation, the memory 604 is a non-volatile memory unit or units. The memory 604 may also be another form of computer-readable medium, such as a magnetic or optical disk.

The storage device 606 is capable of providing mass storage for the computing device 600. In one implementation, the storage device 606 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 604, the storage device 606, or memory on processor 602.

The high speed controller 608 manages bandwidth-intensive operations for the computing device 500, while the low speed controller 612 manages lower bandwidth-intensive operations. Such allocation of functions is exemplary only. In one implementation, the high-speed controller 608 is coupled to memory 604, display 616 (e.g., through a graphics processor or accelerator), and to high-speed expansion ports 610, which may accept various expansion cards (not shown). In the implementation, low-speed controller 612 is coupled to storage device 506 and low-speed expansion port 614. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 620, or multiple times in a group of such servers. It may also be implemented as part of a rack server system 624. In addition, it may be implemented in a personal computer such as a laptop computer 622. Alternatively, components from computing device 600 may be combined with other components in a mobile device (not shown), such as device 650. Each of such devices may contain one or more of computing device 600, 650, and an entire system may be made up of multiple computing devices 600, 650 communicating with each other.

Computing device 650 includes a processor 652, memory 664, an input/output device such as a display 654, a communication interface 666, and a transceiver 668, among other components. The device 650 may also be provided with a storage device, such as a microdrive or other device, to provide additional storage. Each of the components 650, 652, 664, 654, 666, and 668, are interconnected using various buses, and several of the components may be mounted on a common motherboard or in other manners as appropriate.

The processor 652 can execute instructions within the computing device 650, including instructions stored in the memory 664. The processor may be implemented as a chipset of chips that include separate and multiple analog and digital processors. The processor may provide, for example, for coordination of the other components of the device 650, such as control of user interfaces, applications run by device 650, and wireless communication by device 650.

Processor 652 may communicate with a user through control interface 658 and display interface 656 coupled to a display 654. The display 654 may be, for example, a TFT LCD (Thin-Film-Transistor Liquid Crystal Display) or an OLED (Organic Light Emitting Diode) display, or other appropriate display technology. The display interface 656 may comprise appropriate circuitry for driving the display 654 to present graphical and other information to a user. The control interface 658 may receive commands from a user and convert them for submission to the processor 652. In addition, an external interface 662 may be provided in communication with processor 652, so as to enable near area communication of device 650 with other devices. External interface 662 may provide, for example, for wired communication in some implementations, or for wireless communication in other implementations, and multiple interfaces may also be used.

The memory 664 stores information within the computing device 650. The memory 664 can be implemented as one or more of a computer-readable medium or media, a volatile memory unit or units, or a non-volatile memory unit or units. Expansion memory 674 may also be provided and connected to device 650 through expansion interface 672, which may include, for example, a SIMM (Single In Line Memory Module) card interface. Such expansion memory 674 may provide extra storage space for device 650, or may also store applications or other information for device 650. Specifically, expansion memory 674 may include instructions to carry out or supplement the processes described above, and may include secure information also. Thus, for example, expansion memory 674 may be provided as a security module for device 650, and may be programmed with instructions that permit secure use of device 650. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 664, expansion memory 674, or memory on processor 652, that may be received, for example, over transceiver 668 or external interface 662.

Device 650 may communicate wirelessly through communication interface 666, which may include digital signal processing circuitry where necessary. Communication interface 666 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 668. In addition, short-range communication may occur, such as using a Bluetooth, WiFi, or other such transceiver (not shown). In addition, GPS (Global Positioning System) receiver module 670 may provide additional navigation- and location-related wireless data to device 650, which may be used as appropriate by applications running on device 650.

Device 650 may also communicate audibly using audio codec 660, which may receive spoken information from a user and convert it to usable digital information. Audio codec 660 may likewise generate audible sound for a user, such as through a speaker, e.g., in a handset of device 650. Such sound may include sound from voice telephone calls, may include recorded sound (e.g., voice messages, music files, etc.) and may also include sound generated by applications operating on device 650.

The computing device 650 may be implemented in a number of different forms, as shown in the figure. For example, it may be implemented as a cellular telephone 680. It may also be implemented as part of a smart phone 682, personal digital assistant, or other similar mobile device.

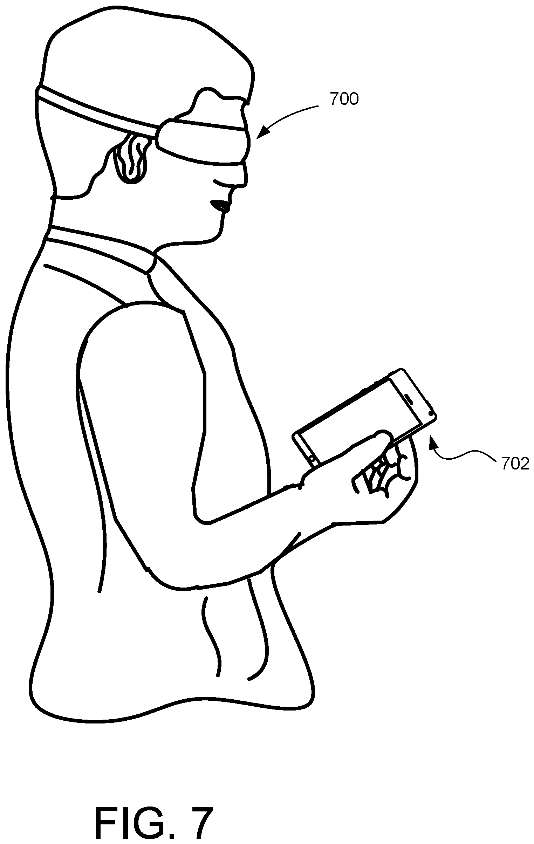

FIG. 7 illustrates an example implementation of a head-mounted display as shown in FIGS. 3 and 5. In FIG. 7, a user wearing an HMD 700 is holding a portable handheld electronic device 702. The handheld electronic device 702 may be, for example, a smartphone, a controller, a joystick, or another portable handheld electronic device(s) that may be paired with, and communicate with, the HMD 700 for interaction in the immersive virtual environment generated by the HMD 700. The handheld electronic device 702 may be operably coupled with, or paired with the HMD 700 via, for example, a wired connection, or a wireless connection such as, for example, a WiFi or Bluetooth connection. This pairing, or operable coupling, of the handheld electronic device 702 and the HMD 700 may provide for communication between the handheld electronic device 702 and the HMD 700 and the exchange of data between the handheld electronic device 702 and the HMD 700. This may allow the handheld electronic device 602 to function as a controller in communication with the HMD 700 for interacting in the immersive virtual environment generated by the HMD 700. That is, a manipulation of the handheld electronic device 702, such as, for example, a beam or ray emitted by the handheld electronic device 702 and directed to a virtual object or feature for selection, and/or an input received on a touch surface of the handheld electronic device 702, and/or a movement of the handheld electronic device 702, may be translated into a corresponding selection, or movement, or other type of interaction, in the immersive virtual environment generated by the HMD 700. For example, the HMD 700, together with the handheld electronic device 702, may generate a virtual environment as described above, and the handheld electronic device 702 may be manipulated to effect a change in scale, or perspective, of the user relative to the virtual features in the virtual environment as described above.

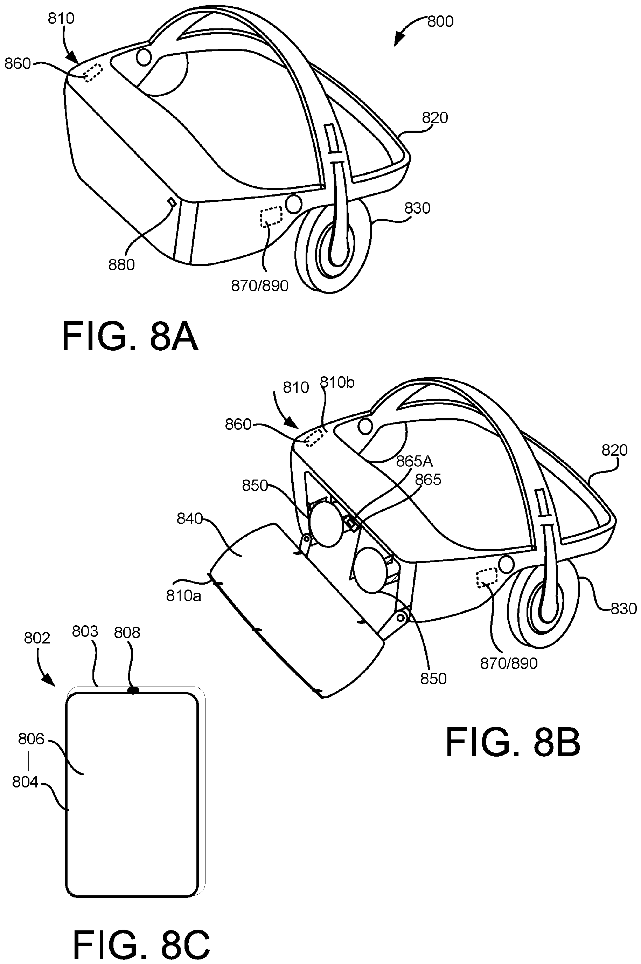

FIGs. 8A and 8B are perspective views of an example HMD, such as, for example, the HMD 700 worn by the user in FIG. 7, and FIG. 8C illustrates an example handheld electronic device, such as, for example, the handheld electronic device 702 shown in FIG. 7.

The handheld electronic device 802 may include a housing 803 in which internal components of the device 802 are received, and a user interface 804 on an outside of the housing 803, accessible to the user. The user interface 804 may include a touch sensitive surface 806 configured to receive user touch inputs. The user interface 804 may also include other components for manipulation by the user such as, for example, actuation buttons, knobs, joysticks and the like. In some implementations, at least a portion of the user interface 804 may be configured as a touchscreen, with that portion of the user interface 804 being configured to display user interface items to the user, and also to receive touch inputs from the user on the touch sensitive surface 806. The handheld electronic device 802 may also include a light source 808 configured to selectively emit light, for example, a beam or ray, through a port in the housing 803, for example, in response to a user input received at the user interface 804.

The HMD 800 may include a housing 810 coupled to a frame 820, with an audio output device 830 including, for example, speakers mounted in headphones, also be coupled to the frame 820. In FIG. 8B, a front portion 810a of the housing 810 is rotated away from a base portion 810b of the housing 810 so that some of the components received in the housing 810 are visible. A display 840 may be mounted on an interior facing side of the front portion 810a of the housing 810. Lenses 850 may be mounted in the housing 810, between the user's eyes and the display 840 when the front portion 810a is in the closed position against the base portion 810b of the housing 810. In some implementations, the HMD 800 may include a sensing system 860 including various sensors and a control system 870 including a processor 890 and various control system devices to facilitate operation of the HMD 800.

In some implementations, the HMD 800 may include a camera 880 to capture still and moving images. The images captured by the camera 880 may be used to help track a physical position of the user and/or the handheld electronic device 802 in the real world, or physical environment relative to the virtual environment, and/or may be displayed to the user on the display 840 in a pass through mode, allowing the user to temporarily leave the virtual environment and return to the physical environment without removing the HMD 800 or otherwise changing the configuration of the HMD 800 to move the housing 810 out of the line of sight of the user.

In some implementations, the HMD 800 may include a gaze tracking device 865 to detect and track an eye gaze of the user. The gaze tracking device 865 may include, for example, an image sensor 865A, or multiple image sensors 865A, to capture images of the user's eyes, for example, a particular portion of the user's eyes, such as, for example, the pupil, to detect, and track direction and movement of, the user's gaze. In some implementations, the HMD 800 may be configured so that the detected gaze is processed as a user input to be translated into a corresponding interaction in the immersive virtual experience.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the specification.

In one example, in an electronic apparatus such as VR server computer 120, the object is provided in the VR environment as a mesh, the mesh including a plurality of vertices, edges, and faces.

In another example, in an electronic apparatus such as VR server computer 120, the controlling circuitry configured to identify the conflict condition is further configured to identify a common vertex, edge, or face of the mesh of the object on which the first manipulation and the second manipulation is performed.

In another example, in an electronic apparatus such as VR server computer 120, the controlling circuitry configured to resolve the conflict is further configured to represent (i) the first manipulation as a first operational transformation and (ii) the second manipulation as a second operational transformation and apply predefined rules to the first operational transformation and the second operational transformation to produce the grant of the first manipulation and the denial of the second manipulation.

In another example, in an electronic apparatus such as VR server computer 120, the controlling circuitry is further configured to record second order effects of the first manipulation.

It will also be understood that when an element is referred to as being on, connected to, electrically connected to, coupled to, or electrically coupled to another element, it may be directly on, connected or coupled to the other element, or one or more intervening elements may be present. In contrast, when an element is referred to as being directly on, directly connected to or directly coupled to another element, there are no intervening elements present. Although the terms directly on, directly connected to, or directly coupled to may not be used throughout the detailed description, elements that are shown as being directly on, directly connected or directly coupled can be referred to as such. The claims of the application may be amended to recite exemplary relationships described in the specification or shown in the figures.

While certain features of the described implementations have been illustrated as described herein, many modifications, substitutions and changes will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components and/or features of the different implementations described.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A method, comprising:
receiving, by processing circuitry of a virtual reality, VR, server configured to produce a VR environment, a first request from a first user to perform a first manipulation of an object in the VR environment from a current state to a first state and a second request from a second user to perform a second manipulation of the object in the VR environment from the current state to a second state;
generating a conflict state indicating a conflict between the first request and the second request;
providing the first user with an image of the object after performing the first manipulation;
providing the second user with an image of the object after performing the second manipulation;
resolving the conflict to produce a resolved condition indicating a grant of the first request and a denial of the second request; and
in response to producing the resolved condition, providing the second user with an image of a manipulation of the object to the first state.

2. The method as in claim 1, wherein providing the second user with an image of a manipulation of the object to the first state includes generating a manipulation of the object from the second state to the first state through a set of intermediate states.

3. The method as in claim 1, further comprising:
in response to receiving the first request and the second request, providing the first user with an image of the object after performing the second manipulation and providing the second user with an image of the object after performing the first manipulation, each of the first user and second user being provided with respective images of the manipulations of the object to the first state and the second state; and
in response to producing the resolved condition, providing the first user with a deletion of the object in the second state, and
wherein providing the second user with an image of a manipulation of the object to the first state includes providing the second user with the deletion of the object in the second state.

4. The method as in claim 1, wherein the object is provided in the VR environment as a mesh, the mesh including a plurality of vertices, edges, and faces;
wherein generating the conflict state includes identifying a common vertex, edge, or face of the mesh of the object on which the first manipulation and the second manipulation is performed.

5. The method as in claim 1, wherein resolving the conflict includes:
representing (i) the first manipulation as a first operational transformation and (ii) the second manipulation as a second operational transformation;
applying predefined rules to the first operational transformation and the second operational transformation to produce the grant of the first manipulation and the denial of the second manipulation.

6. The method of claim 1, further comprising recording second order effects of the first manipulation.

7. A computer program product comprising a nontransitive storage medium, the computer program product including code that, when executed by processing circuitry of a virtual reality, VR, server configured to produce a VR environment in which a first user and a second user is immersed, causes the processing circuitry to perform a method, the method comprising:
receiving a first request from a first user to perform a first manipulation of an object in the VR environment from a current state to a first state and a second request from a second user to perform a second manipulation of the object in the VR environment from the current state to a second state;
generating a conflict state indicating a conflict between the first request and the second request;
providing the first user with an image of the object after performing the first manipulation;
providing the second user with an image of the object after performing the second manipulation;
resolving the conflict to produce a resolved condition indicating a grant of the first request and a denial of the second request; and
in response to producing the resolved condition, providing the second user with an image of a manipulation of the object to the first state.

8. The computer program product as in claim 7, wherein providing the second user with an image of a manipulation of the object to the first state includes generating a manipulation of the object from the second state to the first state through a set of intermediate states.

9. The computer program product as in claim 7, wherein the method further comprises:
in response to receiving the first request and the second request, providing the first user with an image of the object after performing the second manipulation and providing the second user with an image of the object after performing the first manipulation, each of the first user and second user being provided with respective images of the manipulations of the object to the first state and the second state; and
in response to producing the resolved condition, providing the first user with a deletion of the object in the second state, and
wherein providing the second user with an image of a manipulation of the object to the first state includes providing the second user with the deletion of the object in the second state.

10. The computer program product as in claim 7, wherein the object is provided in the VR environment as a mesh, the mesh including a plurality of vertices, edges, and faces;
wherein generating the conflict state includes identifying a common vertex, edge, or face of the mesh of the object on which the first manipulation and the second manipulation is performed.

11. The computer program product as in claim 7, wherein resolving the conflict includes:
representing (i) the first manipulation as a first operational transformation and (ii) the second manipulation as a second operational transformation;
applying predefined rules to the first operational transformation and the second operational transformation to produce the grant of the first manipulation and the denial of the second manipulation.

12. The computer program product of claim 7, wherein the method further comprises recording second order effects of the first manipulation.

13. An electronic apparatus configured to produce a virtual reality, VR, environment in which a first user and a second user is immersed, the electronic apparatus comprising:
memory; and
controlling circuitry coupled to the memory, the controlling circuitry being configured to:
receive a first request from a first user to perform a first manipulation of an object in the VR environment from a current state to a first state and a second request from a second user to perform a second manipulation of the object in the VR environment from the current state to a second state;
generate a conflict state indicating a conflict between the first request and the second request;
provide the first user with an image of the object after performing the first manipulation;
provide the second user with an image of the object after performing the second manipulation;
resolve the conflict to produce a resolved condition indicating a grant of the first request and a denial of the second request; and
in response to producing the resolved condition, provide the second user with an image of a manipulation of the object to the first state.

14. The electronic apparatus as in claim 13, wherein the controlling circuitry configured to provide the second user with an image of a manipulation of the object to the first state is further configured to generate a manipulation of the object from the second state to the first state through a set of intermediate states.

15. The electronic apparatus as in claim 13, wherein the controlling circuitry is further configured to:
in response to receiving the first request and the second request, provide the first user with an image of the object after performing the second manipulation and providing the second user with an image of the object after performing the first manipulation, each of the first user and second user being provided with respective images of the manipulations of the object to the first state and the second state; and
in response to producing the resolved condition, provide the first user with a deletion of the object in the second state, and
wherein the controlling circuitry configured to provide the second user with an image of a manipulation of the object to the first state is further configured to provide the second user with the deletion of the object in the second state.

## Patentansprüche

1. Verfahren, umfassend:
Empfangen, durch Verarbeitungsschaltungen eines Virtual Reality, VR,-Servers, konfiguriert zum Erzeugen einer VR-Umgebung, einer ersten Anfrage von einem ersten Benutzer, um eine erste Manipulation eines Objekts in der VR-Umgebung von einem aktuellen Zustand in einen ersten Zustand durchzuführen, und einer zweiten Anfrage von einem zweiten Benutzer, um eine zweite Manipulation des Objekts in der VR-Umgebung von dem aktuellen Zustand in einen zweiten Zustand durchzuführen;
Erzeugen eines Konfliktzustands, der einen Konflikt zwischen erster Anfrage und zweiter Anfrage angibt;
Bereitstellen eines Bildes des Objekts nach dem Durchführen der ersten Manipulation für den ersten Benutzer;
Bereitstellen eines Bildes des Objekts nach dem Durchführen der zweiten Manipulation für den zweiten Benutzer;
Lösen des Konflikts zum Herstellen einer gelösten Bedingung, die eine Bewilligung der ersten Anfrage und eine Ablehnung der zweiten Anfrage angibt; und
als Reaktion auf das Herstellen der gelösten Bedingung, Bereitstellen eines Bildes einer Manipulation des Objekts in den ersten Zustand für den zweiten Benutzer.

2. Verfahren nach Anspruch 1, wobei das Bereitstellen eines Bildes einer Manipulation des Objekts in den ersten Zustand für den zweiten Benutzer das Erzeugen einer Manipulation des Objekts vom zweiten Zustand in den ersten Zustand durch einen Satz von Zwischenzuständen beinhaltet.

3. Verfahren nach Anspruch 1, ferner umfassend:
als Reaktion auf das Empfangen der ersten Anfrage und der zweiten Anfrage, Bereitstellen eines Bildes des Objekts für den ersten Benutzer nach dem Durchführen der zweiten Manipulation und Bereitstellen eines Bildes des Objekts für den zweiten Benutzer nach dem Durchführen der ersten Manipulation, wobei für den ersten Benutzer als auch für den zweiten Benutzer die jeweiligen Bilder der Manipulationen des Objekts in den ersten Zustand und in den zweiten Zustand bereitgestellt werden; und
als Reaktion auf das Herstellen der gelösten Bedingung, Bereitstellen einer Löschung des Objekts im zweiten Zustand, für den ersten Benutzer, und
wobei das Bereitstellen eines Bildes einer Manipulation des Objekts in den ersten Zustand für den zweiten Benutzer das Bereitstellen der Löschung des Objekts in dem zweiten Zustand für den zweiten Benutzer beinhaltet.

4. Verfahren nach Anspruch 1, wobei das Objekt in der VR-Umgebung als ein Netz bereitgestellt wird, wobei das Netz eine Vielzahl von Eckpunkten, Kanten und Flächen beinhaltet;
wobei das Erzeugen des Konfliktzustands das Identifizieren eines gemeinsamen Eckpunktes, einer Kante oder einer Fläche des Netzes des Objekts, an dem die erste Manipulation und die zweite Manipulation durchgeführt wird, beinhaltet.

5. Verfahren nach Anspruch 1, wobei das Lösen des Konflikts Folgendes umfasst:
Darstellen (i) der ersten Manipulation als eine erste operative Transformation und (ii) der zweiten Manipulation als eine zweite operative Transformation;
Anwenden von vordefinierten Regeln auf die erste und die zweite operative Transformation, um die Bewilligung der ersten Manipulation und die Verweigerung der zweiten Manipulation zu erzeugen.

6. Verfahren nach Anspruch 1, ferner umfassend das Aufzeichnen von Effekten zweiter Ordnung der ersten Manipulation.

7. Rechnerprogrammprodukt, umfassend ein nicht flüchtiges Speichermedium, wobei das Rechnerprogrammprodukt Code beinhaltet, der, wenn dieser von einer Verarbeitungsschaltung eines Virtual-Reality, VR, -Servers ausgeführt wird, der dafür konfiguriert ist, eine VR-Umgebung zu erzeugen, in die ein erster Benutzer und ein zweiter Benutzer eintaucht, die Verarbeitungsschaltung dazu veranlasst, ein Verfahren durchzuführen, wobei das Verfahren Folgendes umfasst:
Empfangen einer ersten Anfrage von einem ersten Benutzer zum Durchführen einer ersten Manipulation eines Objekts in der VR-Umgebung von einem aktuellen Zustand zu einem ersten Zustand und einer zweiten Anfrage von einem zweiten Benutzer zum Durchführen einer zweiten Manipulation des Objekts in der VR-Umgebung von einem aktuellen Zustand zu einem zweiten Zustand;
Erzeugen eines Konfliktzustands, der einen Konflikt zwischen der erster Anfrage und der zweiter Anfrage angibt;
Bereitstellen eines Bildes des Objekts nach dem Durchführen der ersten Manipulation für den ersten Benutzer;
Bereitstellen eines Bildes des Objekts nach dem Durchführen der zweiten Manipulation für den zweiten Benutzer;
Lösen des Konflikts zum Herstellen einer gelösten Bedingung, die eine Bewilligung der ersten Anfrage und eine Ablehnung der zweiten Anfrage angibt; und
als Reaktion auf das Herstellen der gelösten Bedingung, Bereitstellen eines Bildes einer Manipulation des Objekts in den ersten Zustand für den zweiten Benutzer.

8. Rechnerprogrammprodukt nach Anspruch 7, wobei das Bereitstellen eines Bildes einer Manipulation des Objekts in den ersten Zustand für den zweiten Benutzer das Erzeugen einer Manipulation des Objekts vom zweiten Zustand in den ersten Zustand durch einen Satz von Zwischenzuständen beinhaltet.

9. Rechnerprogrammprodukt nach Anspruch 7, wobei das Verfahren ferner umfasst:
als Reaktion auf das Empfangen der ersten Anfrage und der zweiten Anfrage, Bereitstellen eines Bildes des Objekts für den ersten Benutzer nach dem Durchführen der zweiten Manipulation und Bereitstellen eines Bildes des Objekts für den zweiten Benutzer nach dem Durchführen der ersten Manipulation, wobei für den ersten Benutzer als auch für den zweiten Benutzer die jeweiligen Bilder der Manipulationen des Objekts in den ersten Zustand und in den zweiten Zustand bereitgestellt werden; und
als Reaktion auf das Herstellen der gelösten Bedingung, Bereitstellen einer Löschung des Objekts im zweitem Zustand für den ersten Benutzer, und
wobei das Bereitstellen eines Bildes einer Manipulation des Objekts in den ersten Zustand für den zweiten Benutzer das Bereitstellen der Löschung des Objekts in dem zweiten Zustand für den zweiten Benutzer beinhaltet.

10. Rechnerprogrammprodukt nach Anspruch 7, wobei das Objekt in der VR-Umgebung als ein Netz bereitgestellt wird, wobei das Netz eine Vielzahl von Eckpunkten, Kanten und Flächen beinhaltet;
wobei das Erzeugen des Konfliktzustands das Identifizieren eines gemeinsamen Eckpunktes, einer Kante oder einer Fläche des Netzes des Objekts beinhaltet, an dem die erste Manipulation und die zweite Manipulation durchgeführt wird.

11. Rechnerprogrammprodukt nach Anspruch 7, wobei das Lösen des Konflikts Folgendes beinhaltet:
Darstellen (i) der ersten Manipulation als eine erste operative Transformation und (ii) der zweiten Manipulation als eine zweite operative Transformation;
Anwenden von vordefinierten Regeln auf die erste und die zweite operative Transformation, um die Bewilligung der ersten Manipulation und die Verweigerung der zweiten Manipulation zu erzeugen.

12. Rechnerprogrammprodukt nach Anspruch 7, wobei das Verfahren das Aufzeichnen von Effekten zweiter Ordnung der ersten Manipulation beinhaltet.

13. Elektronische Vorrichtung, dafür konfiguriert, eine Virtual-Reality, VR, -Umgebung herzustellen, in die ein erster Benutzer und ein zweiter Benutzer eintauchen, wobei die elektronische Vorrichtung Folgendes umfasst:
einen Speicher; und
mit dem Speicher verbundene Steuerschaltungen,
wobei die Steuerschaltungen für Folgendes konfiguriert sind:
Empfangen einer ersten Anfrage von einem ersten Benutzer zum Durchführen einer ersten Manipulation eines Objekts in der VR-Umgebung von einem aktuellen Zustand in einen ersten Zustand und einer zweiten Anfrage von einem zweiten Benutzer zum Durchführen einer zweiten Manipulation des Objekts in der VR-Umgebung von einem aktuellen Zustand in einen zweiten Zustand;
Erzeugen eines Konfliktzustands, der einen Konflikt zwischen der ersten Anfrage und der zweiten Anfrage angibt;
Bereitstellen eines Bildes des Objekts nach dem Durchführen der ersten Manipulation für den ersten Benutzer;
Bereitstellen eines Bildes des Objekts nach dem Durchführen der zweiten Manipulation für den zweiten Benutzer;
Lösen des Konflikts, um eine gelöste Bedingung herzustellen, die eine Bewilligung der ersten Anfrage und eine Ablehnung der zweiten Anfrage angibt; und
als Reaktion auf das Herstellen der gelösten Bedingung, Bereitstellen eines Bildes einer Manipulation des Objekts in den ersten Zustand für den zweiten Benutzer.

14. Elektronische Vorrichtung nach Anspruch 13, wobei die Steuerschaltung, dafür konfiguriert, dem zweiten Benutzer ein Bild einer Manipulation des Objekts in den ersten Zustand bereitzustellen, und ferner dafür konfiguriert, eine Manipulation des Objekts aus dem zweiten Zustand in den ersten Zustand über einen Satz von Zwischenzuständen zu erzeugen.

15. Elektronische Vorrichtung nach Anspruch 13, wobei die Steuerschaltung ferner konfiguriert ist um:
als Reaktion auf das Empfangen der ersten Anfrage und der zweiten Anfrage, Bereitstellen eines Bildes des Objekts nach dem Durchführen der zweiten Manipulation für den ersten Benutzer und Bereitstellen eines Bildes des Objekts nach dem Durchführen der ersten Manipulation für den zweiten Benutzer, wobei für den ersten Benutzer als auch für den zweiten Benutzer die jeweiligen Bilder der Manipulationen des Objekts in den ersten Zustand und in den zweiten Zustand bereitgestellt werden; und
als Reaktion auf das Herstellen der gelösten Bedingung, Bereitstellen einer Löschung des Objekts in zweitem Zustand für den ersten Benutzer, und
wobei die Steuerschaltung konfiguriert ist zum Bereitstellen eines Bildes einer Manipulation des Objekts in den ersten Zustand für den zweiten Benutzer und ferner konfiguriert ist zum Bereitstellen der Löschung des Objekts in dem zweiten Zustand für den zweiten Benutzer.

## Revendications

1. Procédé, comprenant:
la réception, par le traitement d'un serveur de circuit d'une réalité virtuelle, VR, configuré pour produire un environnement VR, d'une première demande d'un premier utilisateur pour exécuter une première manipulation d'un objet dans l'environnement VR à partir d'un état actuel vers un premier état et une deuxième demande d'un deuxième utilisateur pour exécuter une deuxième manipulation de l'objet dans l'environnement VR de l'état actuel à un deuxième état;
la génération d'un état de conflit indiquant un conflit entre la première demande et la deuxième demande;
la fourniture au premier utilisateur d'une image de l'objet après l'exécution de la première manipulation;
la fourniture au deuxième utilisateur d'une image de l'objet après l'exécution de la deuxième manipulation;
la résolution du conflit pour produire une condition résolue indiquant un accord de la première demande et un refus de la deuxième demande; et
en réponse à la production de la condition résolue, la fourniture au deuxième utilisateur d'une image d'une manipulation de l'objet au premier état.

2. Procédé selon la revendication 1, dans lequel la fourniture du deuxième utilisateur avec une image d'une manipulation de l'objet au premier état comprend la génération d'une manipulation de l'objet à partir du deuxième état au premier état via un ensemble d'états intermédiaires.

3. Procédé selon la revendication 1, comprenant en outre:
en réponse à la réception de la première demande et de la deuxième demande, la fourniture au premier utilisateur d'une image de l'objet après l'exécution de la deuxième manipulation et la fourniture au deuxième utilisateur d'une image de l'objet après l'exécution de la première manipulation, chacun du premier utilisateur et deuxième utilisateur étant pourvu des images respectives des manipulations de l'objet au premier état et au deuxième état; et
en réponse à la production de la condition résolue, la fourniture au premier utilisateur d'une suppression de l'objet dans le deuxième état, et
dans lequel la fourniture au deuxième utilisateur d'une image d'une manipulation de l'objet au premier état comprend la fourniture au deuxième utilisateur de la suppression de l'objet dans le deuxième état.

4. Procédé selon la revendication 1, dans lequel l'objet est pourvu dans l'environnement VR comme un maillage, le maillage comprenant une pluralité de sommets, de bords et de faces;
dans lequel la génération de l'état de conflit comprend l'identification d'un sommet, d'un bord ou d'une face en commun du maillage de l'objet sur lequel la première manipulation et la deuxième manipulation sont exécutées.

5. Procédé selon la revendication 1, dans lequel la résolution du conflit comprend:
la représentation (i) de la première manipulation comme une première transformation opérationnelle et (ii) de la deuxième manipulation comme une deuxième transformation opérationnelle;
l'application de règles prédéfinies à la première transformation opérationnelle et à la deuxième transformation opérationnelle pour produire l'accord de la première manipulation et le refus de la deuxième manipulation.

6. Procédé selon la revendication 1, comprenant en outre l'enregistrement des effets de deuxième commande de la première manipulation.

7. Produit de programme informatique comprenant un support de stockage non transitoire, le produit de programme informatique comprenant un code qui, lorsqu'il est exécuté par le serveur de circuit de traitement d'une réalité virtuelle, VR, configuré pour produire un environnement VR dans lequel un premier utilisateur et un deuxième utilisateur sont immergés, amène le circuit de traitement à exécuter un procédé, le procédé comprenant:
la réception d'une première demande à partir d'un premier utilisateur pour exécuter une première manipulation d'un objet dans l'environnement VR d'un état actuel à un premier état et une deuxième demande à partir d'un deuxième utilisateur pour exécuter une deuxième manipulation de l'objet dans l'environnement VR de l'état actuel à un deuxième état;
la génération d'un état de conflit indiquant un conflit entre la première demande et la deuxième demande;
la fourniture au premier utilisateur d'une image de l'objet après l'exécution de la première manipulation;
la fourniture au deuxième utilisateur d'une image de l'objet après l'exécution de la deuxième manipulation;
la résolution du conflit pour produire une condition résolue indiquant un accord de la première demande et un refus de la deuxième demande; et
en réponse à la production de la condition résolue, la fourniture au deuxième utilisateur d'une image d'une manipulation de l'objet au premier état.

8. Produit du programme informatique selon la revendication 7, dans lequel la fourniture au deuxième utilisateur d'une image d'une manipulation de l'objet au premier état comprend la génération d'une manipulation de l'objet à partir du deuxième état au premier état via un ensemble d'états intermédiaires.

9. Produit de programme informatique selon la revendication 7, dans lequel le procédé comprenant en outre:
en réponse à la réception de la première demande et de la deuxième demande, la fourniture au premier utilisateur d'une image de l'objet après l'exécution de la deuxième manipulation et la fourniture au deuxième utilisateur d'une image de l'objet après l'exécution de la première manipulation, chacun du premier utilisateur et deuxième utilisateur étant pourvu des images respectives des manipulations de l'objet au premier état et au deuxième état; et
en réponse à la production de la condition résolue, la fourniture au premier utilisateur d'une suppression de l'objet dans le deuxième état, et
dans lequel la fourniture au deuxième utilisateur d'une image d'une manipulation de l'objet au premier état comprend la fourniture au deuxième utilisateur de la suppression de l'objet dans le deuxième état.

10. Produit du programme informatique selon la revendication 7, dans lequel l'objet est pourvu dans l'environnement VR comme un maillage, le maillage comprenant une pluralité de sommets, de bords et de faces;
dans lequel la génération de l'état de conflit comprend l'identification d'un sommet, d'un bord ou d'une face en commun du maillage de l'objet sur lequel la première manipulation et la deuxième manipulation sont exécutées.

11. Produit du programme informatique selon la revendication 7, dans lequel la résolution du conflit comprend:
la représentation (i) de la première manipulation comme une première transformation opérationnelle et (ii) de la deuxième manipulation comme une deuxième transformation opérationnelle;
l'application de règles prédéfinies à la première transformation opérationnelle et à la deuxième transformation opérationnelle pour produire l'accord de la première manipulation et le refus de la deuxième manipulation.

12. Produit du programme informatique selon la revendication 7, dans lequel le procédé comprend en outre l'enregistrement d'effets d'ordre secondaire de la première manipulation.

13. Appareil électronique configuré pour produire un environnement de réalité virtuelle, VR dans lequel un premier utilisateur et un deuxième utilisateur sont immergés, l'appareil électronique comprenant:
une mémoire; et
un circuit de contrôle couplé à la mémoire, le circuit de contrôle étant configuré pour:
recevoir une première demande à partir d'un premier utilisateur pour exécuter une première manipulation d'un objet dans l'environnement VR d'un état actuel à un premier état et une deuxième demande d'un deuxième utilisateur pour exécuter une deuxième manipulation de l'objet dans l'environnement VR à partir de l'état actuel vers un deuxième état;
générer un état de conflit indiquant un conflit entre la première demande et la deuxième demande;
fournir au premier utilisateur une image de l'objet après l'exécution de la première manipulation;
fournir au deuxième utilisateur une image de l'objet après l'exécution de la deuxième manipulation;
résoudre le conflit pour produire une condition résolue indiquant une accord de la première demande et un refus de la deuxième demande; et
en réponse à la production de la condition résolue, fournir au deuxième utilisateur une image d'une manipulation de l'objet au premier état.

14. Appareil électronique selon la revendication 13, dans lequel le circuit de contrôle configuré pour fournir au deuxième utilisateur une image d'une manipulation de l'objet au premier état est en outre configuré pour générer une manipulation de l'objet à partir du deuxième état vers le premier état via un ensemble d'états intermédiaires.

15. Appareil électronique selon la revendication 13, dans lequel le circuit de contrôle est en outre configuré pour:
en réponse à la réception de la première demande et de la deuxième demande, fournir au premier utilisateur une image de l'objet après l'exécution de la deuxième manipulation et la fourniture au deuxième utilisateur d'une image de l'objet après l'exécution de la première manipulation, chacun du premier utilisateur et du deuxième utilisateur étant pourvus d'images respectives des manipulations de l'objet au premier état et au deuxième état; et
en réponse à la production de la condition résolue, fournir au premier utilisateur une suppression de l'objet dans le deuxième état, et
dans lequel le circuit de contrôle configuré pour fournir au deuxième utilisateur une image d'une manipulation de l'objet au premier état est en outre configuré pour fournir au deuxième utilisateur la suppression de l'objet dans le deuxième état.
